# EUROPÄISCHE PATENTANMELDUNG

(11) **EP 1 645 581 A1**
(43) Veröffentlichungstag der Anmeldung: **12.04.2006**
(21) Anmeldenummer: 04023925.3
(22) Anmeldetag: 07.10.2004
(51) Int. Cl.: C08G 18/36, C08G 18/08, C08G 18/38, C08G 18/32, C09D 175/04, C09D 133/00

(54) **Polyurethanharze mit Säuregruppen**

(71) Anmelder: Cytec Surface Specialties Austria GmbH, 8402 Werndorf (AT)
(72) Erfinder: Arzt, Anton, 8430 Neutillmitsch (AT); Burkl, Julius, 8053 Graz (AT); Garber, Gudrun, 8503 St. Josef (AT); Petritsch, Gerlinde, 8054 Graz (AT); Schafheutle, Markus Dr., 8044 Graz (AT); Völker, Achim Dr., 63069 Offenbach (DE); Wango, Jörg, 8142 Wundschuh (AT)
(74) Vertreter: Deckers, Hellmuth Alexander

(57) **Zusammenfassung**

Wasserverdünnbare Polyurethanharze mit Säuregruppen, wobei die Polyurethanharze Bausteine enthalten abgeleitet von Ölen **A,** die zumindest teilweise ungesättigt sind, von olefinisch ungesättigten aliphatischen Säuren **B** oder deren Anhydriden **B',** von Verbindungen **C** mit gegenüber Säuregruppen oder Säureanhydridgruppen reaktiven funktionellen Gruppen ausgewählt aus Epoxidgruppen, Hydroxylgruppen, Mercaptangruppen und Aminogruppen, die beim Umsetzen mit den Verbindungen **B** oder **B'** unter Bildung einer Estergruppe, einer Thioestergruppe oder einer Säureamidgruppe reagieren, wobei die Verbindungen **C** ausgewählt sind aus Verbindungen **C**", die zusätzlich Sulfonsäuregruppen oder durch elektronenanziehende Substituenten aktivierte Carbonsäuregruppen enthalten, und Verbindungen **C**', die zusätzlich mindestens eine Hydroxylgruppe enthalten, die bei der Reaktion mit den Verbindungen **B** oder **B**' erhalten bleibt, und wobei mindestens ein Massenanteil von 25 % der Verbindungen **C** aus Verbindungen **C"** besteht, und mehrfunktionellen Isocyanaten **D**, ein Verfahren zu ihrer Herstellung, ihre Verwendung als Katalysatoren bei der Härtung von Hydroxylgruppen enthaltenden Bindemitteln mit Aminoplastharzen, und Einbrennlacke, die diese Katalysatoren enthalten

## Beschreibung

Die Erfindung betrifft wasserverdünnbare Polyurethanharze mit Säuregruppen, ein Verfahren zu deren Herstellung sowie ihre Verwendung als Katalysatoren für die Härtung von Hydroxylgruppen enthaltenden Bindemitteln mit Melamin-Formaldehyd-Harzen.

Die Härtung von Harzen, die Hydroxylgruppen als funktionelle Gruppen enthalten, kann bei Raumtemperatur mit mehrfunktionellen Verbindungen wie Isocyanaten erfolgen, wobei der Isocyanathärter erst unmittelbar vor der Applikation oder sogar erst bei der Applikation zugesetzt wird (Zwei-Komponenten-Bindemittel). Es ist auch möglich, Härter einzusetzen, die erst bei erhöhter Temperatur aktiv werden (Ein-Komponenten-Bindemittel), wobei dann die Vermischung von Harz und Härter bereits vor der Applikation erfolgen kann und die fertig formulierten Bindemittel eine ausreichende Lagerstabilität besitzen. Zur Beschleunigung der Härtungsreaktion bei erhöhter Temperatur werden meist Katalysatoren zugesetzt. Der Zusatz von Katalysatoren ist stets erforderlich, wen als Härtungsmittel mit niedrigen aliphatischen linearen und verzweigten Alkoholen mit einem bis vier Kohlenstoffatomen zumindest teilweise verätherte Aminoplastharze, also Umsetzungsprodukte von Formaldehyd mit Aminoplastbildnern wie Melamin, Guanaminen, Harnstoffen oder deren Mischungen, eingesetzt werden. Die bei der Härtung ablaufende Umätherungsreaktion wird üblicherweise sauer katalysiert. Als Katalysatoren werden bevorzugt organische Säuren wie para-Toluolsufonsäure oder deren Derivate eingesetzt. Solche niedermolekularen Verbindungen können jedoch aus dem gehärteten Lackfilm extrahiert werden, sie unterliegen auch als niedermolekulare Verbindungen dem Chemikaliengesetz und der Neustoffverordnung.

Es besteht daher die Aufgabe, Katalysatoren bereitzustellen, die wegen ihres makromolekularen Charakters nicht aus dem gehärteten Lackfilm extrahiert werden können, und die zumindest gleich gute Wirksamkeit wie die bekannten Katalysatoren aufweisen. Ferner sollen sie die mechanischen und chemischen Eigenschaften des gehärteten Lackfilms nicht ungünstig beeinflussen und nicht zu Verfärbungen oder Glanzabfall des Lackfilms führen.

Diese Aufgabe wird gelöst, indem von pflanzlichen oder tierischen Ölen abgeleitete Ausgangsstoffe zur Synthese von Polyurethanen verwendet werden, wobei diese im Mittel jeweils mindestens eine Säuregruppe im Molekül aufweisen, die für die Härtung von Aminoplastharzen katalytische Wirksamkeit aufweist.

Gegenstand der Erfindung sind daher wasserverdünnbare Polyurethanharze **ABCD** mit Säuregruppen, wobei die Polyurethanharze Bausteine enthalten abgeleitet von Ölen **A,** die zumindest teilweise ungesättigt sind, von olefinisch ungesättigten aliphatischen Säuren **B** oder deren Anhydriden **B',** von Verbindungen **C** mit gegenüber Säuregruppen oder Säureanhydridgruppen reaktiven funktionellen Gruppen ausgewählt aus Epoxidgruppen, Hydroxylgruppen, Mercaptangruppen und Aminogruppen, die beim Umsetzen mit den Verbindungen **B** oder **B'** unter Bildung einer Estergruppe, einer Thioestergruppe oder einer Säureamidgruppe reagieren, wobei die Verbindungen **C** ausgewählt sind aus Verbindungen **C",** die zusätzlich Sulfonsäuregruppen oder durch elektronenanziehende Substituenten aktivierte Carbonsäuregruppen enthalten, und Verbindungen **C',** die zusätzlich mindestens eine Hydroxylgruppe enthalten, die bei der Reaktion mit den Verbindungen **B** oder **B'** erhalten bleibt, und wobei mindestens ein Massenanteil von 25 % der Verbindungen C aus Verbindungen **C"** besteht, und mehrfunktionellen Isocyanaten **D.**

Ein weiterer Gegenstand der Erfindung ist ein Verfahren zur Herstellung wasserverdünnbarer, Säuregruppen enthaltender Polyurethanharze **ABCD** umfassend die Schritte a) Propfen eines Öls **A** mit einer olefinisch ungesättigten aliphatischen Säure **B** oder dem Anhydrid **B'** einer derartigen Säure, b) polymer-analoge Umsetzung des Addukts **AB** aus dem Schritt a) mit einer Verbindung **C** mit gegenüber Säuregruppen oder Säureanhydridgruppen reaktiven funktionellen Gruppen ausgewählt aus Epoxidgruppen, Hydroxylgruppen, Mercaptangruppen und Aminogruppen, die beim Umsetzen mit den Verbindungen **B** oder **B'** unter Bildung einer Estergruppe, einer Thioestergruppe oder einer Säureamidgruppe reagieren, wobei die Verbindungen **C** ausgewählt sind aus Verbindungen **C",** die zusätzlich Sulfonsäuregruppen oder durch elektronenanziehende Substituenten aktivierte Carbonsäuregruppen enthalten, und Verbindungen **C',** die zusätzlich mindestens eine Hydroxylgruppe enthalten, die bei der Reaktion mit den Verbindungen **B** oder **B'** erhalten bleibt, wobei mindestens ein Massenanteil von 25 % der Verbindungen **C** aus Verbindungen **C"** besteht, und wobei der Einsatz der Verbindungen **C'** dann bevorzugt ist, wenn das Pfropfprodukt **AB** selbst frei von Hydroxylgruppen ist oder bei der Reaktion der Säuregruppen oder Säureanhydridgruppen im Pfropfprodukt **AB** keine Hydroxylgruppen entstanden sind, und c) Addition der Produkte **ABC** an die mehrfunktionellen Isocyanate **D** unter Urethanbildung.

Weitere Gegenstände der Erfindung sind die Verwendung der wasserverdünnbaren Polyurethanharze **ABCD** als Katalysator bei der Härtung von Hydroxylgruppen enthaltenden Bindemitteln mit Aminoplastharzen, und Einbrennlacke enthaltend Hydroxylgruppen aufweisen Bindemittel, Aminoplastharze und die wasserverdünnbaren Polyurethanharze **ABCD.**

Die Acidität der Säuregruppe wird über ihren pKa-Wert gemessen; ist der pKa-Wert niedriger als der von Essigsäure, so ist deren Acidität größer als die von Essigsäure.

Geeignete Öle **A** sind sämtliche trocknenden und halbtrocknenden Öle mit mindestens einer olefinischen Doppelbindung pro Molekül, insbesondere Öle mit einer Jodzahl von 100 cg/g bis 200 cg/g, beispielsweise Sojaöl, Leinöl, Rapsöl, Sonnenblumenöl, Tallöl, Baumwollsaatöl, Safloröl, Sonnenblumenöl, Perillaöl und Mohnöl. Ebenfalls geeignet sind tierische Öle wie Heringsöl, Menhadenöl oder Sardinenöl. Besonders bevorzugt sind Leinöl, Perillaöl, Holzöl und Tallöl.

Geeignete Säuren **B** sind insbesondere Maleinsäure, deren Anhydrid, Acryl- und Methacrylsäure, Vinylessigsäure, Crotonsäure, Itacon-, Citracon- und Mesaconsäure, sowie Tetrahydrophthalsäure und deren Anhydrid.

Geeignete Verbindungen **C** enthalten gegenüber Säuregruppen oder Säureanhydridgruppen reaktive funktionelle Gruppen ausgewählt aus Epoxidgruppen, Hydroxylgruppen, Mercaptangruppen und Aminogruppen, die beim Umsetzen mit den Verbindungen **B** oder **B'** unter Bildung einer Estergruppe, einer Thioestergruppe oder einer Säureamidgruppe reagieren, wobei die Verbindungen **C** ausgewählt sind aus Verbindungen **C",** die zusätzlich Sulfonsäuregruppen oder durch elektronenanziehende Substituenten aktivierte Carbonsäuregruppen enthalten, und Verbindungen **C',** die zusätzlich mindestens eine Hydroxylgruppe enthalten, die bei der Reaktion mit den Verbindungen **B** oder **B'** erhalten bleibt, und wobei mindestens ein Massenanteil von 25 % der Verbindungen **C** aus Verbindungen **C"** besteht.

Geeignet sind daher solche Verbindungen **C1**, die unter Ringöffnung oder unter erneuter Bildung der cyclischen Struktur mit cyclischen Säureanhydriden reagieren, wie beispielsweise Hydroxy(alkylen)amine mit mindestens einer primären Aminogruppe und mindestens einer Hydroxylgruppe, Verbindungen **C2,** die mit Säureanhydriden unter Addition und Bildung einer Hydroxylgruppe reagieren, wie Epoxidverbindungen, und Verbindungen **C3,** die mit Säuren unter Addition oder Veresterung reagieren und mindestens eine nicht unter den Bedingungen der Umsetzung unter Veresterung mit Säuren reagierende Hydroxylgruppe enthalten, beispielsweise eine sekundäre oder tertiäre Hydroxylgruppe. Verbindungen dieser Klassen **C1, C2** und **C3** enthalten zusätzlich entweder mindestens eine Sulfonsäuregruppe oder durch elektronenanziehende Substituenten aktivierte Carbonsäuregruppe und bilden dann die Klasse **C",** oder zusätzlich mindestens eine Hydroxylgruppe, die bei der Reaktion mit den Verbindungen **B** oder **B'** erhalten bleibt, und fallen dann in die Klasse **C'.** Mindestens ein Massenanteil von 25 %, bevorzugt mindestens 30 %, und insbesondere mindestens 40 % der Verbindungen **C** sind solche Verbindungen **C",** die mindestens eine Säuregruppe enthalten, die bewirkt, daß die **Verbindung C** eine stärkere Säure als Essigsäure ist, wie durch elektronenabziehende Substituenten aktivierte Carbonsäuregruppen oder besonders bevorzugt Sulfonsäuregruppen. Geeignete Verbindungen **C'** sind beispielsweise Äthanolamin, 2- und 3-Propanolamin und N,N-Bis-2-hydroxyäthyl-diamino-äthan. Eine geeignete Verbindung **C"** ist insbesondere Taurin.

Geeignete mehrfunktionelle Isocyanate **D** sind aliphatische und aromatische Isocyanate mit mindestens zwei Isocyanatgruppen pro Molekül, insbesondere Diisocyanate wie aliphatische lineare, verzweigte und cyclische Isocyanate wie 1,4-Tetramethylendiisocyanat, 1,6-Hexamethylendiisocyanat (HDI), 2,2,4,- und 2,4,4-Trimethylhexandiisocyanat, Dodecamethylendiisocyanat, 1,4-Diisocyanatocyclohexan, 1-Isocyanato-3,3,5-trimethyl-5-isocyanatomethyl-cyclohexan (Isophorondiisocyanat, IPDI) und Bis-(4-isocyanatocyclohexyl)methan (HMDI), und aromatische Isocyanate wie 2,4-und 2,6-Toluylendiisocyanat oder deren Gemisch, Bis-(4-isocyanatophenyl)-methan, Tetramethylxylylendiisocyanat sowie die isomeren 1,5-, 1,8- und 2,3-Naphthalindiisocyanate.

Die gemäß der Erfindung erhältlichen sauren wasserverdünnbaren Polyurethanharze lassen sich unter anderem in Mischungen von wasserverdünnbaren Bindemitteln und insbesondere als Katalysatoren bei der Härtung von Hydroxylgruppen enthaltenden Bindemitteln mit Aminoplastharzen verwenden. Dabei ist es bevorzugt, daß der Quotient der Masse des wasserverdünnbaren Polyurethanharzes und der Masse des Aminoplastharzes 0,5 % bis 10 % beträgt.

Bevorzugt weisen die Polyurethanharze einen Massenanteil an Säuregruppen von 0,5 cg/g bis 5 cg/g, besonders bevorzugt von 1,0 cg/g bis 4,0 cg/g, und insbesondere von 1,5 cg/g bis 3 cg/g. Der Massenanteil an Säuregruppen wird berechnet durch Division der Masse der Säuregruppen (-SO₃H für Sulfonsäuren, -COOH für Carbonsäuregruppen; dabei werden auch die ionisierten Säuregruppen in der protonisierten Form in die Berechnung einbezogen) im Harz durch die Masse des Harz-Festkörpers. Die Angabe erfolgt in "cg/g" oder "%".

Die Erfindung wird durch die nachstehenden Beispiele erläutert. In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiele

### Beispiel 1: Herstellung eines Addukts aus Leinöl und Maleinsäureanhydrid

880 g Leinöl wurden mit 220 g Maleinsäureanhydrid (MSA) gemischt. Diese Mischung wurde unter Rührung und Stickstoffatmosphäre langsam auf 210 °C erwärmt. Bei dieser Temperatur wurde der Ansatz so lange gehalten, bis durch Titration des wäßrigen Extrakts mit Methylorange als Indikator kein freies MSA mehr nachweisbar war. Anschließend wurde auf Raumtemperatur abgekühlt.

### Beispiel 2: Addition von Taurin an das Leinöl-Maleinsäureanhydrid-Addukt

9,8 g Taurin wurden in einer Mischung 8,9 g Äthanolamin und 10 g entionisiertem Wasser in der Wärme (ca. 80 °C) gelöst. Nach vollständiger Auflösungwurde diese Lösung mit 30,4 g Triäthylamin (TEA) versetzt. Zu dieser zweiphasigen Mischung wurde bei 80 °C mit langsam steigender Temperatur, wobei das siedende Triäthylamin kondensiert und der Reaktionsmischung wieder zugeführt wurde, 110 g des Produktes aus Beispiel 1 über 90 Minuten zudosiert. Nach beendeter Zugabe wurde bis auf maximal 180 °C aufgeheiztund das TEA-Wasser-Azeotrop abdestilliert, wobei das TEA im Kreislauf geführt wurde. Nachdem 140 g Wasser aus dem Reaktionsgut entfernt waren, wurde das TEA durch Destillation unter vermindertem Druck entfernt. Man erhielt ein viskoses Harz mit einer Säurezahl von 37,4 mg/g und einer Aminzahl von weniger als 0,4 mg/g, das klar in Wasser löslich war. Eine Lösung von 10 g des Harzes in 100 g der Lösung wies einen pH-Wert von 3,9 auf.

### Beispiel 3: Herstellung einer wäßrigen Dispersion eines sauren Polyurethanharzes

30 g des Harzes aus Beispiel 2 und 10 g Rizinusöl wurden mit 6 g N-Methylpyrrolidon gemischt und auf ca. 40 °C erwärmt. Zu dieser Lösung wurden 6 g Toluylendüsocyanat gegeben. Dabei wurde unter Ausnutzung der Exothermie auf 70 °C bis 72 °C erwärmt. Bei dieser Temperatur wurde so lange gehalten, bis eine Isocyanatkonzentration von 1,6 % bis 1,65 % erreicht war. Dann wurden 2,3 g Diäthanolamin zugegeben und eingerührt. Dabei war eine Erwärmung bis 82 °C zu beobachten. Nach erneutem Abkühlen auf 70 °C wurde das Harz mit 87,8 g entionisiertem Wasser verdünnt. Man erhielt eine sehr feinteilige Dispersion mit einem nichtflüchtigen Anteil von 34 % und einem pH-Wert, gemessen an einer Lösung von 10 g des Harzes in 100 g der Lösung von 7,2.

### Beispiel 4: wäßrige Dispersion eines hochmolekularen kettenverlängerten Polyurethanharzes

30 g des Harzes aus Beispiel 2 und 30 g Rizinusöl wurden in 11g N-Methylpyrrolidon gemischt und auf 40 °C erwärmt. Zu dieser Lösung wurden zunächst 4 g Toluylendiisocyanat und sofort danach 8,4 g Isophorondiisocyanat gegeben. Unter Ausnutzung der Exothermie wurde die Mischung auf 70 °C bis 72 °C erwärmt und bei dieser Temperatur so lange gehalten, bis die Isocyanatkonzentration zwischen 1,8 % und 1,9 % lag. Bei Erreichen dieser Konzentration wurde das Harz mit 109,7 g erwärmten (70 °C) und entionisiertem Wasser dispergiert. Sofort danach wurde mit einer Lösung aus 2,6 g Isophorondiamin in 12,6 g entionisiertem Wasser kettenverlängert. Nach einer Nachrührzeit von 120 Minuten erhielt man eine feinteilige Dispersion mit einem nichtflüchtigen Anteil von 36 %, einer Viskosität (23 °C, 25 s⁻¹) von 87 mPa·s und einem pH-Wert von 7,6, gemessen an einer Lösung von 10 g des Harzes in 100 g der Lösung. Der Massenanteil an Säuregruppen (Sulfonsäuregruppen) betrug ca. 2,0 cg/g.

### Beispiel 5: Lackprüfung

### Klarlack:

Aus 75,71g ®Macrynal VSM 2872/70 BAC (Hydroxylgruppen enthaltendes Acrylharz), 42,90 g ®Maprenal VMF 3924/70B (mit Methanol und n-Butanol veräthertes hochreaktives Melaminharz gelöst in n-Butanol; beide Surface Specialties Germany GmbH & Co KG), 28,50 g ®Setalux 91756 (Acrylatharz; Akzo Nobel Resins NV, Hydroxylzahl 90 mg/g), sowie den Stabilisatoren 2,50 g ®Tinuvin 384 und 1,20 g ®Tinuvin 123 (Ciba Specialty Chemicals), 45,00 g Methoxypropylacetat, und 0,20 g ®Byk 310 (Untergrundbenetzungsadditiv, Byk Chemie GmbH) wurde ein Klarlack mit einer Spritzviskosität entsprechend einer Auslaufzeit von 27 s formuliert, gemessen in einem DIN 4 Becher bei 23 °C (DIN 53 211).

### Vergleichs-Katalysatoren für die Vernetzungsreaktion:

VK1: Para-Toluolsulfonsäure ("PTSA", Allied Signal-Riedel de Haën), gelöst zu einer 50 %igen Lösung in iso-Butanol.
VK2: mit einem Amin blockierte Dodecylbenzolsulfonsäure (®Nacure 5225, King Industries)

Der Massenanteil *w*_{K} des Katalysators ist bezogen auf die Masse des Feststoffs in dem Aminoplasthärter ®Maprenal VMF 3924. Der Katalysator (VK1, *w*_{K}*=* 1% und VK2, *w*_{K}= 0,8 % und die erfindungsgemäßen Dispersion gemäß Beispiel 4, *w*_{K} = 4 %) wird zu dem fertig formulierten Klarlack gegeben.

### Vorbereitung der Prüfbleche

Entfettete Gradientenbleche aus gewalztem Stahl (DIN 1624, 400 mm × 100 mm, Dicke 0,8 mm) wurden mit dem nachstehend beschriebenen lösungsmittelhaltigen Primer besprüht (mit einem Luftdruck von 4 bar = 0,4 MPa), die beschichteten Bleche wurden während 25 Minuten bei 140 °C eingebrannt.

Der Primer wurde formuliert aus 34,90 g ®Vialkyd AN 951/70SNA (Polyesterharz, Surface Specialties Germany GmbH & Co. KG), 16,30 g Titan Dioxid-Pigment vom Rutiltyp (Kronos Titan), 16,30 g Ruß (®Printex 300, DegussaHüls AG), 16,30 g ®Blanc fixe micro (Sachtleben), 0,25 g ®Aerosil 380 (feinteilige Kieselsäure, DegussaHüls AG), 2,00 g 2-Äthylhexanol, 6,50 g Methoxypropylacetat und 6,10 g ®Solvesso 150 (Aromatengemisch mit einer mittleren Siedetemperatur von 150 °C, Exxon Chemicals), die gemeinsam in einer Perlmühle bei 50 °C und 7000 min⁻¹ während dreißig Minuten gemahlen wurden. Dann wurden 0,20 g ®Additol XL (Surface Specialties Germany GmbH & Co. KG, Verlaufshilfsmittel), 14,80 g ®Maprenal MF 590/55iBX (Melamin-Vernetzerharz, Surface Specialties GmbH &Co. KG, Germany und 2,30 g Isobutanol zugefügt, die Mischung wurde bei 2000 min⁻¹ weitere 20 Minuten bei 25 °C bis 30 °C gerührt. Die Viskosität wurde dann durch Zusatz von weiterem Lösungsmittel auf 27 bis 30 Sekunden Auslaufzeit aus einem 4 mm-Becher DIN 53211; 23 °C) zum Spritzen eingestellt.

Die Dicke des eingebrannten Lackfilms betrug 40 µm bis 50 µm.

Auf diese Primer/Füller-Schicht wurde eine Grundierung aus einem wäßrigen Schwarzlack ("Smaragdschwarz", DuPont Performance Coatings GmbH & Co. KG) aufgesprüht mit einem Druck von 0,4 MPa bis 0,5 MPa (4 bis 5 bar); man erhielt eine Trockenfilmdicke von 13 µ bis 17 µm nach Trocknen während fünf Minuten bei Raumtemperatur und fünf Minuten bei 80 °C.

Danach wurde der Klarlack gemäß der oben angegebenen Rezeptur bei 0,4 MPa (4 bar) Luftdruck aufgesprüht und 20 Minuten bei 140 °C eingebrannt zu einer Trockenfilmdicke von 35 µm bis 45 µm.

An diesen Blechen wurde das Aussehen ("Wave Scan", langwelliger und kurzwelliger Anteil), der Glanz, die Härte, die Elastizität sowie die Säure- und Lösungsmittelbeständigkeit beurteilt.

Zur Bestimmung der Kratzfestigkeit (Amtec-Kistler-Test) und der Empfindlichkeit auf Überbrennen wurden galvanisch verzinnte Bleche (180 mm × 105 mm, Dicke 0,24 mm) auf dieselbe Weise mit dem Primer beschichtet und eingebrannt; für den Test auf Überbrennen wurde anschließend weitere 60 Minuten bei 140 °C eingebrannt. Nach Abkühlen der Bleche auf Raumtemperatur wurden der Basislack und der Klarlack aufgebracht, die Beschichtung wurde bei 140 °C während 20 Minuten eingebrannt.

### Prüfgrößen und Prüfmittel:

1. Oberfläche: Ein Gerät "wave scan plus *laboratory"der* Firma BYK-Gardner in D-82534 Geretsried
2. Glanz: Glanzmeßgerät Micro-Tri-Gloss der Fa. Byk-Gardner
3. Haftung Gitterschnitt mit 1 mm Schnittabstand, gemäß der EN ISO 2409 Methode, auf die Schnittfläche wurden Streifen von ®TESA 4651 Klebeband der Firma Beiersdorf, Hamburg aufgeklebt und abgezogen, Beurteilung 0: bester Wert, 5 schlechteste Haftung
4. Säuretest mit wäßriger Schwefelsäurelösung (Massenanteil von H₂SO₄ in der Lösung 10 %) Die beschichteten Gradientenbleche wurden auf einen auf 60 °C vorgeheizten Gradientenofen gelegt (Ofen 2615 der Firma BYK-Gardner), mit einer Eppendorf Multipipette (4780) wurde jede Minute ein 50 µl-Tropfen dieser Säure während einer Testzeit von 30 Minuten auf das geheizte Blech aufgetragen, danach wird das Blech mit entionisiertem Wasser abgewaschen. Die Bewertung wird nach 24 Stunden Ruhe bei Raumtemperatur vorgenommen. Die Einwirkzeit bis zur ersten Schädigung der Klarlackschicht (4.1), bis zur völligen Zerstörung der Klarlackschicht (4.2), bis zur ersten Schädigung der Basislackschicht (4.3) und bis zur völligen Zerstörung des Aufbaus aus Basislack und Klarlack (4.4) wurden als Werte notiert.
5.Chemische Beständigkeit gemäß der DaimlerChrysler Testmethode PBODC 371 A: Ein Gradientenofen Typ 2615 der Firma BYK-Gardner wurde auf 30 °C bis 80 °C aufgeheizt, auf ein lackiertes Prüfblech wurden Lösungen der Chemikalien gemäß der Tabelle 1 aufgebracht, anschließend wurde das Blech für 30 Minuten auf den Gradientenheiztisch gelegt.

**Tabelle 1 Prüfchemikalien und Prüfbedingungen**

| **Substanz** | **Volumen** in µl | **Temperaturbereich** in °C | **Segmentabstand** |
|---|---|---|---|
| H₂SO₄¹ | 25 | 30 bis 74 | 1 |
| Pankreatin ² | 50 | 30 bis 74 | 2 |
| Baumharz ³ | 25 | 30 bis 74 | 2 |
| Wasser ⁴ | 250 | 30 bis 74 | 2 |

Temperaturdifferenz : 1 K pro Heizelement.
Zum Entfernen des Baumharzes nach der Einwirkungwurde das beschichtete Blech nach Abkühlen auf 25 °C mit Waschbenzin gereinigt; alle anderen Chemikalien wurden durch Abspülen mit kalten Wasser (15 °C) entfernt.
Nach 24 Stunden Ruhe der Bleche wurde ausgewertet, indem die niedrigste Temperatur ermittelt wurde, bei der eine erste Schädigung des Klarlacks durch die betreffende Chemikalie zu sehen war
*1 Schwefelsäure, p. A. , Massenanteil der Säure in der Lösung 1 %
2 Pankreatin (Fa. Merck GmbH, Darmstadt, Art. 7130) verrieben in einem Porzellanmörser mit der gleichen Masse an entionisiertem Wasser
3 Baumharz (DuPont Performance Coatings GmbH & Co. KG, Wuppertal)
4 entionisiertes Wasser

- 6. Elastizität:: wird geprüft mit einer "Erichsen Tiefungsprüfmaschine 202"; Angabe der Eindrucktiefe, bei der der Lackfilm nicht abreißt
- 7. Kratzfestigkeit:: wird bestimmt mit einer Amtec-Kistler Autowaschanlage gemäß DIN 55668. Die verzinnten Bleche werden eingesetzt für 10 Waschzyklen. Danach werden die Bleche abgespült und der Glanz gemäß Test 7. wird direkt danach und nach Tempern bei 60 °Cwährend 2 Stunden (sogenannte "reflow"-Bedingung) gemessen.

### Rezeptur des Klarlacks:

75,71 kg eines hydroxyfunktionellen Acrylatharzes (®Viacryl VSC 2872, Surface Specialties Germany GmbH & Co. KG, Hydroxylzahl 145 mg/g, Festkörper-Massenanteil 70 %, gelöst in Butylacetat) und 28,5 kg eines hydroxyfunktionellen Acrylatharzes (®Setalux 91756, Akzo Nobel Resins NV, Hydroxylzahl 90 mg/g) wurden mit Lichtschutzmittel, 35 kg Methoxypropylacetat als weiterem Lösungsmittel, und 42,9 kg von einem mit Methanol und Butanol veräthertem MelaminFormaldehydharz (®Maprenal VMF 3924, Festkörper-Massenanteil 70 %, gelöst in n-Butanol, mittlerer Polymerisationsgrad 1,5) zu einem Klarlack mit einem Festkörper-Massenanteil von ca. 54 % formuliert. Die Auslaufzeit (DIN-Becher, 4 mm, 23 °C betrug 36 Sekunden, sie wurde durch Zugabe von weiteren 10 kg Methoxypropylacetat auf 27,5 s eingestellt (Festkörper-Massenanteil 51 %). Dieser Klarlack wurde in vier Portionen geteilt, und als die oberste Schicht auf die gemäß der obenstehenden Beschreibung vorbereiteten Bleche aufgesprüht.

Nach dem Einbrennen wurden die Erichsen-Tiefung (6), die Säurebeständigkeit (4), der Glanz (2), die Oberflächenqualität (1), die Chemikalienbeständigkeit (5), die Kratzfestigkeit (7) und die Haftung (3) bestimmt, vergleichend zu einer nicht katalysierten Klarlack-Zusammensetzung.

Dabei wurden die folgenden Resultate erhalten:

**Tabelle 2 Ergebnisse der Lackprüfung**

| Katalysator | | ohne | DDBSA | PTSS | Harz aus Beispiel 4 |
|---|---|---|---|---|---|
| ***Trockenfilmdicke*** | in µm | | | | |
| Primer | | 40 | 43 | 40 | 47 |
| Basislack | | 16 | 16 | 16 | 15 |
| Klarlack | | 42 | 44 | 34 | 42 |
| | | | | | |
| ***Erichsentiefung*** | in mm | 8,8 | 5,5 | 3,4 | 6,6 |
| | | | | | |
| ***Säurebeständigkeit*** | in min | | | | |
| gemäß 4.1 | | 7 | 10 | 11 | 11 |
| gemäß 4.2 | | 13 | 13 | 13 | 16 |
| gemäß 43 | | 14 | 13 | 13 | 16 |
| gemäß 4.4 | | 16 | 14 | 14 | 17 |
| | | | | | |

| ***Wave scan*** | | | | | |
|---|---|---|---|---|---|
| Langwelligkeit horizontal | | 5,0 | 7,5 | 20,9 | 5 |
| Kurzwelligkeit horizontal | | 9,0 | 36,1 | 49,1 | 8,8 |
| | | | | | |

| ***Glanz*** | | | | | |
|---|---|---|---|---|---|
| Beobachtungswinkel 20° | | 89,4 | 90,7 | 87,5 | 90 |
| Beobachtungswinkel 60° | | 93,6 | 94,3 | 93,7 | 94,6 |
| | | | | | |

| ***Chemikalien-Beständigkeit auf einem Gradientenofen*** | in °C | | | | |
|---|---|---|---|---|---|
| Schwefelsäure 1% soll 55 °C | | 36 | 37 | | 44 |
| Pankreatin soll 55°C | | 56 | 60 | 59 | 57 |
| Baumharz soll 45°C | | 37 | 49 | 61 | 47 |
| Wasser soll 80°C | | 58 | >80 | >80 | >80 |
| | | | | | |

| ***Amtec-Kistler Autowaschanlage*** | | | | | |
|---|---|---|---|---|---|
| Glanz, 20°, Ausgangswert | | 89,6 | 90 | 89,3 | 88 |
| Glanz, 20°, nach 10 Zyklen | | 61,5 | 55 | 75,5 | 60 |
| Glanz 20°, nach 10 Zyklen und 2 h Tempern bei 60 °C | | 60 | 60 | 73 | 74 |
| | | | | | |

| Haftung | | | | | |
|---|---|---|---|---|---|
| Klarlack auf Basislack | | 0 | 0 | 5 | 0 |

Aus den Lackprüfungen ergibt sich, daß die mit dem Harz des Beispiels 4 katalysierten Klarlacke durchweg bessere Ergebnisse in den Tests zeigen; lediglich bei der Kratzfestigkeit im Waschanlagentest ohne nachfolgende Erholung "reflow" zeigt sich ein kleiner Vorteil für den mit para-Toluolsulfonsäure katalysierten Klarlack.

Das Ziel, einen polymeren Katalysator für die Härtung von Einbrennlacken mit Aminoplastharzen zur Verfügung zu stellen, der den bekannten niedermolekularen Katalysatoren ebenbürtig ist, wurde erreicht.

## Patentansprüche

1. Wasserverdünnbare Polyurethanharze mit Säuregruppen, wobei die Polyurethanharze Bausteine enthalten abgeleitet von Ölen **A,** die zumindest teilweise ungesättigt sind, von olefinisch ungesättigten aliphatischen Säuren **B** oder deren Anhydriden **B',** von Verbindungen **C** mit gegenüber Säuregruppen oder Säureanhydridgruppen reaktiven funktionellen Gruppen ausgewählt aus Epoxidgruppen, Hydroxylgruppen, Mercaptangruppen und Aminogruppen, die beim Umsetzen mit den Verbindungen **B** oder **B' unter** Bildung einer Estergruppe, einer Thioestergruppe oder einer Säureamidgruppe reagieren, wobei die Verbindungen **C** ausgewählt sind aus Verbindungen **C",** die zusätzlich Sulfonsäuregruppen oder durch elektronenanziehende Substituenten aktivierte Carbonsäuregruppen enthalten, und Verbindungen **C',** die zusätzlich mindestens eine Hydroxylgruppe enthalten, die bei der Reaktion mit den Verbindungen **B** oder **B'** erhalten bleibt, und wobei mindestens ein Massenanteil von 25 % der Verbindungen **C** aus Verbindungen **C"** besteht, und mehrfunktionellen Isocyanaten **D.**

2. Wasserverdünnbare Polyurethanharze nach Anspruch 1, **dadurch gekennzeichnet, daß** sie einen Massenanteil an Säuregruppen von 0,5 cg/g bis 5 cg/g aufweisen.

3. Verfahren zur Herstellung von wasserverdünnbaren Polyurethanharze nach Anspruch 1, umfassend die Schritte
a) Propfen eines Öls **A** mit einer olefinisch ungesättigten aliphatischen Säure **B** oder dem Anhydrid **B'** einer derartigen Säure,
b) polymer-analoge Umsetzung des Addukts **AB** aus dem Schritt a) mit einer Verbindung **C** mit gegenüber Säuregruppen oder Säureanhydridgruppen reaktiven funktionellen Gruppen ausgewähltaus Epoxidgruppen, Hydroxylgruppen, Mercaptangruppen und Aminogruppen, die beim Umsetzen mit den Verbindungen **B** oder **B' unter** Bildung einer Estergruppe, einer Thioestergruppe oder einer Säureamidgruppe reagieren, wobei die Verbindungen **C** ausgewählt sind aus Verbindungen **C",** die zusätzlich Sulfonsäuregruppen oder durch elektronenanziehende Substituenten aktivierte Carbonsäuregruppen enthalten, und Verbindungen **C',** die zusätzlich mindestens eine Hydroxylgruppe enthalten, die bei der Reaktion mit den Verbindungen **B** oder **B'** erhalten bleibt, wobei mindestens ein Massenanteil von 25 % der Verbindungen **C** aus Verbindungen **C"** besteht, und
c) Addition der Produkte **ABC** an die mehrfunktionellen Isocyanate D unter Urethanbildung.

4. Verfahren nach Anspruch 3, **dadurch gekennzeichnet, daß** die Verbindungen **C'** dann eingesetzt werden, wenn das Pfropfprodukt **AB** selbst frei von Hydroxylgruppen ist oder bei der Reaktion der Säuregruppen oder Säureanhydridgruppen im Pfropfprodukt **AB** keine Hydroxylgruppen entstanden sind.

5. Verfahren nach Anspruch 3, **dadurch gekennzeichnet, daß** im Schritt a) Öle A mit einer Jodzahl von 100 cg/g bis 200 cg/g eingesetzt werden.

6. Verfahren nach Anspruch 3, **dadurch gekennzeichnet, daß** als Säuren B Maleinsäure oder deren Anhydrid eingesetzt werden.

7. Verfahren nach Anspruch 3, **dadurch gekennzeichnet, daß** als Verbindung C" Taurin eingesetzt wird.

8. Verwendung derwasserverdünnbaren Polyurethanharze gemäß Anspruch 1 als Katalysator bei der Härtung von Hydroxylgruppen enthaltenden Bindemitteln mit Aminoplastharzen.

9. Einbrennlacke enthaltend Hydroxylgruppen aufweisen Bindemittel, Aminoplastharze und die wasserverdünnbaren Polyurethanharze gemäß Anspruch 1.

10. Einbrennlacke nach Anspruch 9, **dadurch gekennzeichnet, daß** der Quotient der Masse des wasserverdünnbaren Polyurethanharzes und der Masse des Aminoplastharzes 0,5 % bis 10 % beträgt.
